Europäisches Patentamt

European Patent Office

Office européen des brevets

(19)

(11) EP 0 663 717 B1

## (12) FASCICULE DE BREVET EUROPEEN

(45) Date de publication et mention
de la délivrance du brevet:
**25.03.1998 Bulletin 1998/13**

(51) Int Cl.6: **H02K 49/10**, G01F 1/075

(21) Numéro de dépôt: **95400030.3**

(22) Date de dépôt: **06.01.1995**

(54) **Système d'entraînement en rotation de deux organes mécaniques par accouplement magnétique et compteur de fluide comportant un tel système**

Magnetische Kupplungseinrichtung für Drehantrieb zwei rotierender Elemente und Flüssigkeitszähler mit einer solchen Einrichtung

Magnetic coupling system for driving two rotating elements and fluid meter comprising such a system

(84) Etats contractants désignés:
**AT BE CH DE DK ES FR GB GR IT LI LU NL PT SE**

(30) Priorité: **13.01.1994 FR 9400331**

(43) Date de publication de la demande:
**19.07.1995 Bulletin 1995/29**

(73) Titulaire: **SCHLUMBERGER INDUSTRIES S.A.
92120 Montrouge (FR)**

(72) Inventeurs:
  • **Yonnet, Jean-Paul
    F-38240 Meylan (FR)**
  • **Delamare, Jérôme
    F-38000 Grenoble (FR)**

(56) Documents cités:
  **EP-A- 0 034 992        EP-A- 0 512 516
  EP-A- 0 516 509**

Printed by Jouve, 75001 PARIS (FR)

## Description

La présente invention est relative à un système d'entraînement en rotation autour d'un axe de deux organes mécaniques par accouplement magnétique ainsi qu'à un compteur de fluide comportant un tel système.

Dans différents secteurs de l'industrie et notamment dans celui du comptage, et plus particulièrement dans le domaine du comptage de fluide, on utilise un système d'entraînement par accouplement magnétique pour transmettre un mouvement de rotation entre deux organes mécaniques sensiblement coaxiaux situés de part et d'autre d'une paroi amagnétique et respectivement baignés dans un fluide de caractéristiques physico-chimiques spécifiques.

Chacun de ces organes est pourvu d'un élément aimanté, lesdits éléments aimantés en interaction magnétique constituant un accouplement magnétique. Lorsque l'un des organes, par exemple l'arbre d'une turbine dans un compteur d'eau, est animé d'un mouvement de rotation autour de son axe, l'autre organe, par exemple un second arbre coaxial audit premier arbre et relié à un totalisateur, est entraîné en rotation du fait de l'interaction magnétique entre les deux éléments aimantés de l'accouplement magnétique.

L'élément aimanté de l'accouplement magnétique qui entraîne en rotation l'autre élément aimanté dudit accouplement magnétique est dit menant alors que l'autre est dit mené.

Dans un tel système d'entraînement par accouplement magnétique, un guidage mécanique des deux éléments aimantés dans leurs mouvements de rotation respectifs est nécessaire.

Afin d'accroître les performances des compteurs de fluide et notamment leur sensibilité, un système d'entraînement par accouplement magnétique est soumis à des exigences de plus en plus difficiles à surmonter.

En effet, un tel système d'entraînement par accouplement magnétique doit transmettre le couple mécanique le plus élevé possible et doit avoir une position d'équilibre aussi stable que possible ce qui se traduit notamment par une annulation des forces ou efforts magnétiques appliqués entre les deux éléments aimantés de l'accouplement magnétique selon les trois directions spatiales.

Lorsque ces forces ne sont pas nulles, ce qui est le cas de la quasi totalité des systèmes existants, on constate l'apparition d'efforts sur les guidages mécaniques respectifs des éléments aimantés, créant ainsi des frottements mécaniques qui conduisent à l'usure desdits guidages mécaniques ainsi qu'à une diminution de la sensibilité du compteur de fluide comportant cet entraînement par accouplement magnétique.

Parmi les systèmes d'entraînement par accouplement magnétique connus, on distingue deux familles principales.

La première de ces familles concerne les systèmes d'entraînement dits "face à face" et est basée sur un système d'entraînement par accouplement magnétique dans lequel les éléments aimantés sont des couronnes coaxiales possédant une aimantation axiale à N pôles, N étant pair. Chacune des couronnes comporte une série de N secteurs aimantés régulièrement disposés sur une circonférence de ladite couronne. Les couronnes sont disposées en vis à vis le long de l'axe de telle manière que le pôle nord d'un des secteurs aimantés d'une des couronnes soit placé en face du pôle sud d'un des secteurs aimantés de l'autre couronne, la rotation de la première couronne entraînant la rotation de la seconde couronne.

Cette configuration est stable radialement mais instable axialement. La sensibilité d'un compteur de fluide comportant un tel système d'entraînement est limitée en raison des excentrations mécaniques ou magnétiques produisant des efforts latéraux sur les guidages mécaniques.

La seconde famille concerne les systèmes d'entraînement dits "coaxiaux" et repose sur un système d'entraînement par accouplement magnétique dans lequel les éléments aimantés sont des couronnes concentriques possédant une aimantation radiale à N pôles, N étant pair, chacune des couronnes comportant une série de N secteurs aimantés régulièrement disposés sur une circonférence de ladite couronne de telle manière que chaque secteur aimanté d'une couronne soit face à un secteur aimanté de l'autre couronne, pôle nord de l'un face au pôle sud de l'autre.

Lorsqu'une des couronnes est mise en rotation, l'autre est entraînée en rotation sous l'action d'attraction des aimants.

Cette configuration pour laquelle il existe une seule position où les efforts axiaux sont annulés est stable axialement mais présente une grande instabilité radiale.

En raison de cette grande instabilité radiale, des forces d'attraction magnétiques latérales peuvent s'exercer sur le système d'entraînement en raison notamment de jeux mécaniques de fonctionnement et cette attraction latérale est répercutée sur les guidages mécaniques des couronnes en créant des efforts de frottement.

On connaît également, d'après le brevet européen N°0034992, un système d'entraînement en rotation autour d'un axe de deux organes mécaniques par accouplement magnétique comportant un élément aimanté assujetti à chaque organe mécanique et chacun desdits éléments aimantés est disposé suivant une surface de rayon moyen différent. L'un des éléments comporte deux jeux chacun de plusieurs aimants répartis autour de l'axe. Les deux jeux sont décalés axialement et encadrent dans le sens axial un jeu d'aimants également répartis autour de l'axe et portés par l'autre élément. Dans un exemple de réalisation de ce système d'entraînement, les aimants portés par l'un des éléments sont à aimantation axiale alors que ceux portés par l'autre élément sont à aimantation radiale. Le système d'entraînement précité présente l'avantage de n'être soumis à aucun effort axial ou radial ce qui réduit l'usure des guidages mécaniques des éléments aimantés. Cependant, ce système d'entraînement n'est pas adapté pour certaines applications et notamment quand l'encombrement axial doit être réduit.

La présente invention vise à remédier aux inconvénients précédemment cités en proposant un système d'entraînement en rotation autour d'un axe de deux organes mécaniques par accouplement magnétique et un compteur de fluide comportant un tel système, simples et aux performances améliorées, notamment en termes de stabilité de l'entraînement par accouplement magnétique et donc de sensibilité dudit compteur de fluide, ainsi que de rapport poids/couple transmis par ledit système.

La présente invention a ainsi pour objet un système d'entraînement en rotation autour d'un axe de deux organes mécaniques par accouplement magnétique, comportant un élément aimanté assujetti à chacun desdits organes mécaniques, les deux éléments aimantés étant concentriques, le premier desdits éléments aimantés possède N pôles d'aimantation régulièrement disposés autour de l'axe de rotation suivant une couronne de rayons minimal $R_1$ et maximal $R_2$, N étant pair, le second élément aimanté possédant, d'une part, N pôles d'aimantation régulièrement disposés autour dudit axe de rotation suivant une couronne et, d'autre part, N pôles d'aimantation régulièrement disposés autour de l'axe de rotation suivant une couronne identique à l'autre couronne et de rayons minimal $R_3$ et maximal $R_4$, lesdites couronnes étant solidaires mécaniquement l'une de l'autre et ayant chacune un plan médian perpendiculaire à l'axe de rotation et décalé axialement d'une distance d par rapport au plan médian de la couronne du premier élément aimanté de manière à encadrer axialement cette dernière, caractérisé en ce que l'accouplement magnétique dudit système d'entraînement est de type attractif, l'aimantation de chaque élément aimanté ayant une direction contenue dans un plan perpendiculaire à l'axe de rotation, le rapport

$$\frac{2d}{|(R_3 + R_4) - (R_1 + R_2)|}$$

étant compris entre 0,2 et 0,8.

Dans cette configuration, l'un des éléments aimantés est placé à l'intérieur de l'autre et, pour la position de repos du système d'entraînement, les pôles de l'élément intérieur sont en vis-à-vis de ceux de l'élément extérieur et présentent une nature opposée. Ainsi, lorsque l'un des organes mécaniques portant l'un des éléments aimantés se met en mouvement autour de l'axe de rotation, l'autre élément aimanté et donc l'organe attenant sont entraînés en rotation en raison des forces d'attraction qui s'exercent entre les éléments.

La disposition des éléments aimantés selon l'invention est avantageuse car elle autorise un déplacement axial ou radial de la couronne intérieure par rapport à la couronne extérieure sans engendrer de force axiale ou radiale importante.

Selon des caractéristiques préférentielles de l'invention:

- le rapport

$$\frac{2d}{|(R_3 + R_4) - (R_1 + R_2)|}$$

est préférentiellement compris entre 0,3 et 0,65 lorsque $h_1/R_2$-$R_1$ et $h_2/R_4$-$R_3$ sont compris entre 1,5 et 0,66, $h_1$ et $h_2$ étant les dimensions axiales ou hauteurs respectives de la couronne du premier élément aimanté et de chaque couronne du second élément aimanté.

- le rapport

$$\frac{2d}{|(R_3 + R_4) - (R_1 + R_2)|}$$

est encore plus préférentiellement compris entre 0,35 et 0,5 lorsque chacune des dimensions $h_1$, $R_2$-$R_1$, $h_2$ et $R_4$-$R_3$ est sensiblement inférieure à

$$\frac{|R_3 - R_2|}{4}.$$

Selon un mode de réalisation de l'invention, les rayons R1 et R2 sont inférieurs au rayon minimal R3. Selon une variante de l'invention les rayons R1 et R2 sont supérieurs au rayon maximal R4.

Selon un mode préféré de réalisation de l'invention, au moins un des éléments aimantés est aimanté de manière continue.

L'aimantation de chaque élément aimanté varie en fonction de la position angulaire de telle façon que, pour une position angulaire donnée σ, l'orientation $\alpha_1$ de l'aimantation de l'élément aimanté de plus grand rayon maximal vérifie la relation $\alpha_1 = \frac{N}{2}\sigma + \sigma$, l'orientation $\alpha_2$ de l'aimantation de l'autre élément aimanté vérifiant la relation $\alpha_2 = -\frac{N}{2}\sigma + \sigma$.

Selon une variante, l'aimantation de chaque élément aimanté a une direction sensiblement radiale.

Selon une autre variante de réalisation de l'invention, au moins un des éléments aimantés est aimanté de manière discontinue et la (les) couronne(s) dudit élément aimanté est (sont) constituée(s) d'un nombre pair de portions de couronne aimantées.

L'aimantation de chaque portion de couronne aimantée a une direction uniforme et sensiblement radiale.

Selon encore une autre variante, l'aimantation de chaque élément aimanté varie en fonction de la position angulaire de telle façon que, pour une position angulaire donnée σ, l'orientation $\alpha_1$ de l'aimantation de l'élément aimanté de plus grand rayon maximal vérifie la relation $\alpha_1 = \frac{N}{2}\,\sigma + \sigma$, l'orientation $\alpha_2$ de l'aimantation de l'autre élément aimanté vérifiant la relation $\alpha_2 = -\frac{N}{2}\,\sigma + \sigma$.

Selon d'autres caractéristiques de l'invention :

- le nombre de pôles N est de préférence égal à 4,
- le plan médian du premier élément aimanté est sensiblement confondu avec celui du second élément aimanté,
- chaque couronne présente, dans un plan contenant l'axe de rotation, une section droite sensiblement carrée ou rectangulaire.

Selon encore d'autres caractéristiques :

- au moins une pièce formant entretoise est disposée entre les deux couronnes d'aimantation du second élément aimanté,
- la pièce formant entretoise est une paroi cylindrique,
- la pièce formant entretoise est en matériau magnétique,
- le matériau magnétique de la paroi cylindrique possède la même aimantation que celle du second élément aimanté,
- la paroi cylindrique a un rayon maximal inférieur à R4 et un rayon minimal égal à R3,
- la paroi cylindrique a un rayon maximal égal à R4 et un rayon minimal supérieur à R3,
- la pièce formant entretoise est en matériau amagnétique,
- la paroi cylindrique a un rayon maximal égal à R4 et un rayon minimal égal à R3.

Le système d'entraînement par accouplement magnétique trouve une application particulièrement intéressante dans les compteurs de fluide comprenant une première chambre et une seconde chambre séparées par une paroi étanche qui forme un logement contenant l'un des éléments aimantés, l'autre élément aimanté entourant ledit logement.

Dans un tel compteur de fluide chaque organe mécanique comporte un arbre, l'un des arbres portant l'élément aimanté qui est contenu dans le logement est relié à un totalisateur, l'autre arbre portant l'autre élément aimanté faisant partie d'une turbine axiale.

D'autres caractéristiques et avantages apparaîtront au cours de la description qui va suivre donnée uniquement à titre illustratif et non limitatif et faite en référence aux dessins annexés sur lesquels :

- la figure 1 est une vue schématique en coupe longitudinale d'un compteur d'eau comportant un système d'entraînement par accouplement magnétique selon un mode de réalisation de l'invention;
- la figure 2 est une vue schématique agrandie du système d'entraînement par accouplement magnétique de la figure 1;

- la figure 3 est une vue schématique partielle du système d'entraînement par accouplement magnétique de la figure 2;
- la figure 4 est une vue schématique partielle d'une variante de réalisation d'un système d'entraînement par accouplement magnétique selon l'invention;
- la figure 5 est une vue schématique de dessus de l'aimantation du système d'entraînement par accouplement magnétique selon l'invention;
- la figure 6 est une vue schématique en perspective d'une variante de l'aimantation du système d'entraînement par accouplement magnétique selon l'invention;
- la figure 7 est une vue schématique de dessus d'une autre variante de l'aimantation du système d'entraînement par accouplement magnétique selon l'invention;

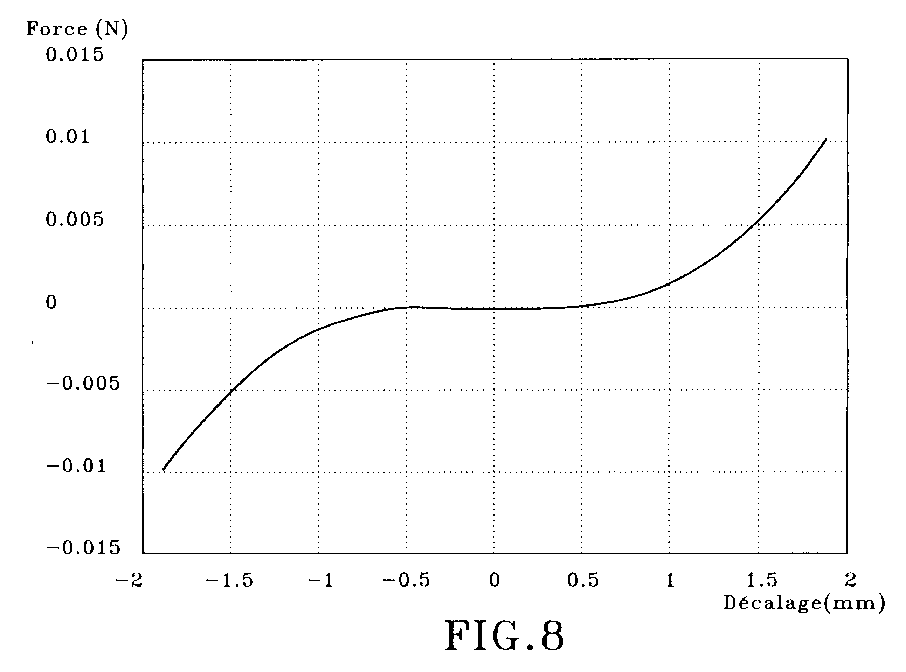

- la figure 8 est un graphique représentant les variations de la force axiale qui s'exerce sur l'élément intérieur mené du système d'entraînement par accouplement magnétique de la figure 2 en fonction de son décalage axial par rapport à la position du plan médian P;
- la figure 9 est une vue schématique partielle d'un autre mode de réalisation d'un système d'entraînement par accouplement magnétique selon l'invention.

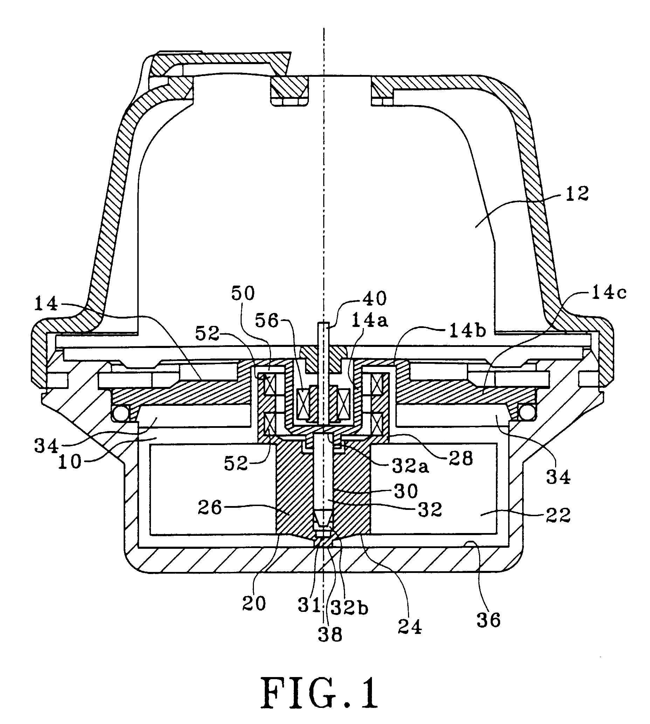

Comme représenté à la figure 1 et désigné dans son ensemble par la référence générale 1, un compteur de fluide, plus particulièrement d'eau, qui comprend un système d'entraînement par accouplement magnétique selon l'invention va maintenant être décrit.

Le compteur d'eau comprend deux chambres 10 et 12 séparées par une paroi 14 qui assure l'étanchéité entre lesdites chambres. L'eau pénètre dans une première chambre 10 dite de mesure par un injecteur et en ressort par un éjecteur, l'injecteur et l'éjecteur n'étant pas représentés dans le plan de la figure 1.

Le compteur comprend également une turbine axiale 20 munie de pales 22 qui sous l'impact du jet d'eau provenant de l'injecteur entraînent en rotation ladite turbine. Cette turbine 20 peut être réalisée dans un matériau de densité voisine de 1 et par exemple égale à 0,9.

La turbine axiale 20 possède un arbre axial 24, réalisé en matériau amagnétique et formé, d'une part, d'un moyeu 26 sur lequel sont fixées les pales 22 de ladite turbine et, d'autre part, à l'extrémité supérieure dudit moyeu d'une collerette 28 s'étendant parallèlement à l'axe de rotation de la turbine.

Un conduit axial 30 est ménagé dans l'arbre axial 24 afin de recevoir un pivot axial 32 qui est solidaire de la paroi étanche 14 par une extrémité axiale 32a.

Ce pivot 32 possède une autre extrémité axiale 32b, opposée à l'extrémité axiale 32a et ayant une forme effilée. Ainsi, lorsque la turbine est au repos, l'extrémité axiale 32b du pivot 32 est en contact avec le fond 31 du conduit axial 30. La chambre de mesure comporte également des chicanes 34 ou nervures disposées à la partie supérieure de ladite chambre, radialement par rapport à l'axe de rotation de la turbine. Plus précisément ces chicanes sont fixées à la paroi étanche 14. Lorsque la turbine est mise en rotation sous l'effet de la circulation d'eau, le fond 31 du conduit axial 30 s'écarte progressivement de l'extrémité effilée 32b du pivot 32 et pour des vitesses de fluide élevées la turbine tend à venir en contact avec la paroi 36 de la partie inférieure de la chambre de mesure 10 au moyen d'une butée axiale 38 ainsi que représenté sur la figure 1. Les chicanes 34 assurent la fonction décrite ci-dessus et servent à créer aux vitesses de fluide élevées un couple de freinage hydraulique qui permet de conférer au compteur une bonne métrologie.

La seconde chambre 12 du compteur d'eau comporte un totalisateur relié, d'une part, à un arbre 40 coaxial à celui de la turbine et apte à tourner autour du même axe de rotation que celle-ci et, d'autre part, à un dispositif d'affichage du volume d'eau mesuré par le compteur. Le totalisateur et le dispositif d'affichage ne sont pas représentés sur la figure 1.

Ainsi que représenté sur la figure 1, la paroi étanche 14 présente en son centre, une portion 14a déformée en direction de la chambre de mesure 10 de manière à former un logement du côté de la seconde chambre et une partie saillante dans ladite chambre de mesure 10.

La paroi étanche présente également une deuxième portion 14b annulaire formant un canal dans la chambre de mesure 10 entourant la première portion saillante 14a et qui est destiné à recevoir la collerette 28 de la turbine 20.

Une troisième portion 14c sensiblement plane s'étend depuis la deuxième portion 14b jusqu'à la périphérie extérieure de la paroi étanche 14.

Les chicanes 34 sont fixées sur cette troisième portion 14c.

Le compteur d'eau comporte un système d'accouplement magnétique 50 pour entraîner en rotation autour de l'axe dudit compteur deux organes mécaniques qui sont les arbres 24 et 40 respectivement associés à la turbine 20 et au totalisateur.

Chacun des organes mécaniques 24, 40 comporte un élément aimanté 52, 56 fixé audit organe.

Les deux éléments aimantés 52 et 56 sont disposés de manière concentrique et sont séparés par la paroi étanche 14.

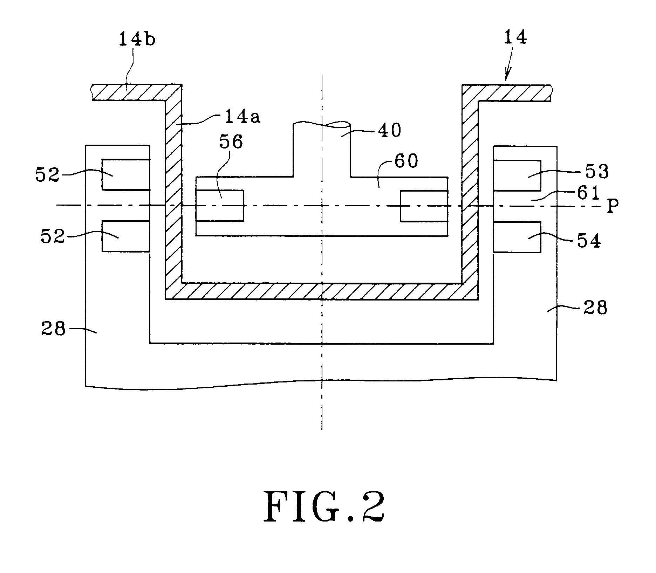

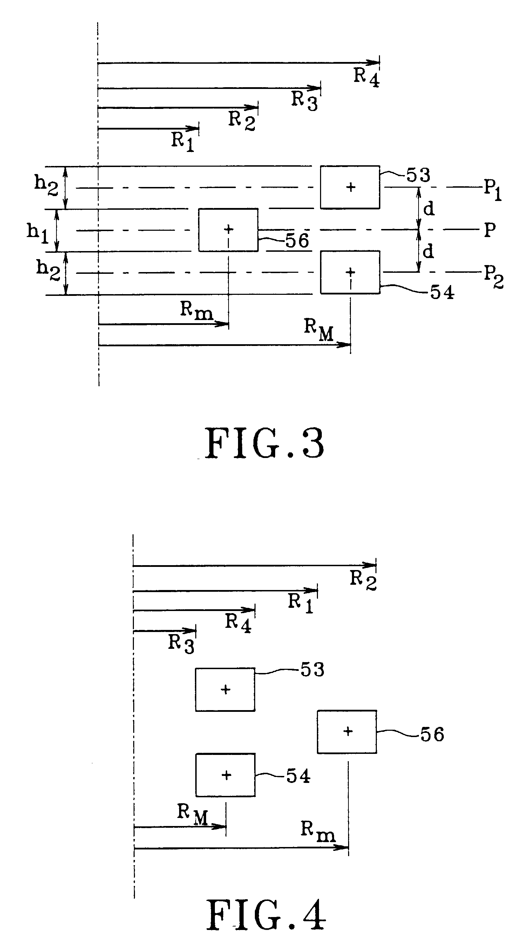

Le système d'entraînement par accouplement magnétique 50 selon le mode de réalisation de l'invention représenté d'une manière schématique sur la figure 1, va être également décrit en référence aux figures 2 et 3.

L'un 52 des éléments aimantés est assujetti à la collerette 28 qui prolonge le moyeu 26 de la turbine 20 entourant ainsi le logement et constitue la partie menante du système d'entraînement.

L'autre élément aimanté 56 est solidaire de l'arbre 40 relié au totalisateur et est disposé dans le logement de la première portion 14a de la paroi étanche 14 prévue à cet effet.

Cet élément aimanté 56 constitue la partie menée du système d'entraînement et est en butée axiale contre le fond du logement de la première portion 14a de la paroi étanche 14 ainsi que représenté à la figure 1.

L'élément aimanté 56 est formé d'une couronne de rayons minimal R1 et maximal R2.

L'arbre 40 est pourvu à une de ses extrémités axiales d'une pièce 60 en forme de disque disposé perpendiculairement à l'axe de rotation de manière à conférer audit arbre une forme de T renversé dans le plan de la figure 1, ledit disque 60 formant la barre transversale du T. Comme représenté sur la figure 2, la couronne 56 est ménagée dans le disque 60 de telle façon que les plans médians dudit disque et de la couronne qui sont perpendiculaires à l'axe de rotation coïncident et que le rayon maximal du disque soit égal à R2.

Dans la chambre de mesure 10, l'élément aimanté 52 constituant la partie menante du système d'entraînement 50 est formé de deux couronnes 53, 54 identiques ayant chacune un rayon minimal R3 et un rayon maximal R4.

Dans cette configuration, illustrée par la figure 3, les rayons R1 et R2 sont inférieurs au rayon minimal R3 et l'élément 56 formé d'une seule couronne est l'élément intérieur du système d'entraînement.

Selon une variante de l'invention représentée à la figure 4, l'élément aimanté menant peut être formé d'une couronne 56 de rayons minimal R1 et maximal R2 et l'élément aimanté 52 mené sera formé d'une double couronne de rayons minimal R3 et maximal R4 telle que décrite précédemment.

Selon cette variante, R1 et R2 sont supérieurs au rayon maximal R4 et l'élément 56 formé d'une seule couronne est l'élément extérieur du système d'entraînement 50.

Comme représenté à la figure 2, ces deux couronnes 53, 54 sont solidaires mécaniquement l'une de l'autre par l'intermédiaire de la collerette 28 à laquelle elles sont assujetties.

Une pièce 61 formant entretoise est disposée entre les deux couronnes 53, 54 de l'élément aimanté menant 52. Par exemple, cette pièce 61 fait partie de la collerette 28 et est en matériau amagnétique.

Ainsi que représenté sur la figure 2, chaque élément aimanté menant 52 ou mené 56, a un plan médian perpendiculaire à l'axe de rotation et le plan médian de l'élément aimanté mené 56 est sensiblement confondu avec celui du disque 60 en un plan P.

Sur la figure 3, les couronnes 53, 54 de l'élément aimanté menant 52 ont chacune un plan médian respectivement P1, P2 qui est décalé axialement d'une distance d par rapport au plan médian P de manière à encadrer axialement la couronne de l'élément aimanté mené.

Les couronnes 53, 54 et 56 ont toutes une section droite de forme rectangulaire dans un plan contenant l'axe de rotation comme celui des figures 1 à 3. Cette section droite pouvant également être de forme carrée. La dimension axiale ou hauteur de la couronne 56 est notée $h_1$ et celle des couronnes 53, 54 est identique et notée $h_2$.

Selon le mode de réalisation de l'invention décrit en référence aux figures 1 à 3, chaque élément aimanté menant 52 ou mené 56 possède une aimantation à N pôles régulièrement répartis autour de l'axe de rotation. N est un nombre pair qui est supérieur ou égal à 2 et dépend de l'application envisagée et des performances attendues par le système d'entraînement par accouplement magnétique 50 conforme à l'invention. Préferentiellement, N est égal à 4.

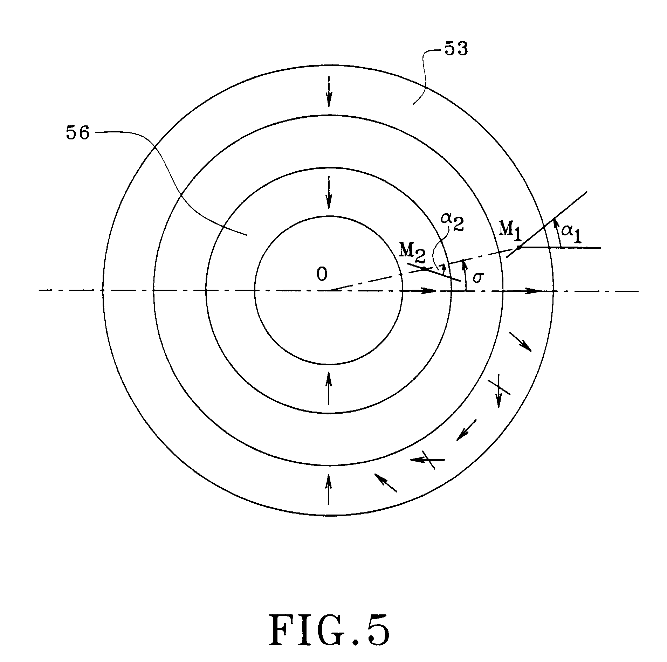

L'aimantation de chaque couronne a une direction qui est contenue dans un plan perpendiculaire à l'axe de rotation et est du type de celle représentée à la figure 5. Chaque couronne 53, 54, 56 est aimantée de manière continue, c'est à dire qu'elle est formée d'une seule pièce aimantée.

Préférentiellement, l'aimantation de chacune des couronnes varie en fonction de la position angulaire considérée.

Ainsi, dans un plan perpendiculaire à l'axe de rotation tel que celui de la figure 5, en prenant pour origine le point 0 situé sur ledit axe de rotation et en définissant l'axe horizontal comme correspondant à l'origine angulaire, on repère les points M1 et M2, appartenant respectivement à l'une des couronnes de l'élément menant 52, la couronne 53, et à la couronne 56 de l'élément mené, par leur position angulaire commune par rapport à l'origine angulaire.

Pour l'une 53 des couronnes de l'élément menant 52 qui est la couronne ayant le plus grand rayon maximal R4, l'orientation $\alpha_1$ de l'aimantation pour la position angulaire σ vérifie la relation :

$$\alpha_1 = \frac{N}{2}\,\sigma + \sigma,\ \text{c'est à dire } \alpha_1 = 3\sigma \text{ pour } N = 4$$

et, pour la couronne de l'élément mené, l'orientation $\alpha_2$ de l'aimantation pour la position angulaire σ vérifie la relation :

$$\alpha_1 = -\frac{N}{2}\,\sigma + \sigma,\ \text{soit } \alpha_2 = -\,\sigma \text{ pour } N = 4$$

Selon une variante non représentée sur les figures, il est possible de prévoir que l'aimantation de chacune des couronnes ait une direction radiale.

Selon une autre variante de réalisation, on peut envisager qu'au moins un élément du système d'entraînement 50 soit aimanté de manière discontinue.

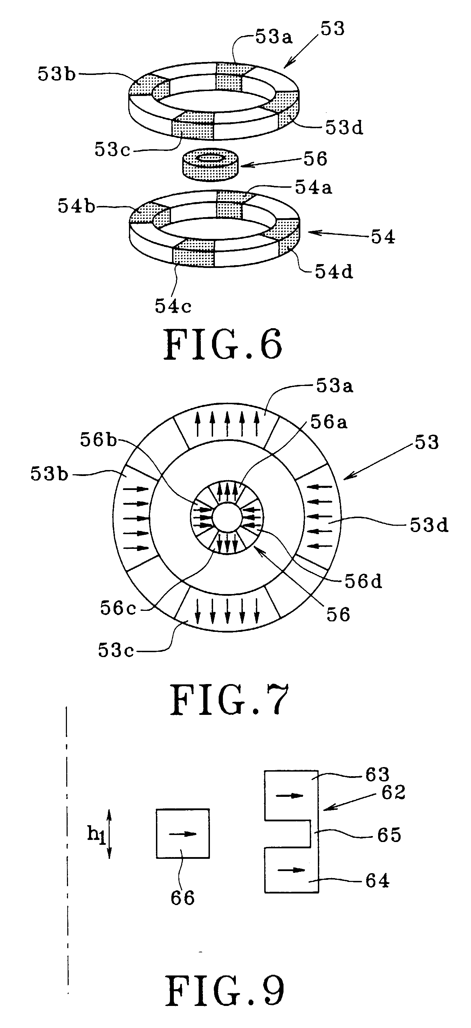

Comme représenté à la figure 6, chaque couronne 53, 54 de l'élément menant 52 comporte quatre portions de couronne 53a, 53b, 53c, 53d, 54a, 54b, 54c, 54d aimantées et régulièrement disposées de manière disjointe suivant ladite couronne 53 ou 54.

Chaque portion de couronne correspond à un pôle d'aimantation.

Pour solidariser entre eux les portions de couronnes aimantées d'une même couronne on intercale entre deux portions consécutives, une portion de couronne en matériau amagnétique exerçant la fonction d'entretoise.

Ces portions de couronne aimantées pourraient également être disposées suivant chaque couronne de manière jointive afin de reconstituer ladite couronne.

L'élément aimanté mené 56 est aimanté de manière continue et est constitué d'une seule couronne aimantée.

Dans cette variante de réalisation (Fig. 6), l'aimantation des deux éléments aimantés menant 52 et mené 56 est identique à celle décrite précédemment en référence à la figure 5.

Il convient de noter qu'une autre variante de réalisation telle que celle représentée à la figure 7 est envisageable.

Dans cette autre variante, les deux éléments aimantés 52 et 56 sont aimantés de manière discontinue et chaque couronne 53, 54, 56 de chaque élément aimanté est constitué d'un nombre pair de portions de couronne, par exemple égal à 4 et correspondant au nombre de pôles d'aimantation.

Les couronnes 53 et 54 comportent respectivement quatre portions de couronnes 53a-d et 54a-d analogues à celles visibles sur la figure 6 et sont donc disposées de façon disjointe suivant chaque couronne.

La couronne 56 comporte quant à elle quatre portions de couronnes 56a, 56b, 56c, 56d visibles sur la figure 7 et disposées de façon disjointe suivant ladite couronne 56.

Cependant ces portions de couronne 56a-d peuvent aussi être jointives.

Comme représenté sur la figure 7, chaque portion de couronne de chaque élément aimanté possède une aimantation de direction uniforme et sensiblement radiale.

On pourrait également réaliser pour chaque élément aimanté des portions de couronne dont l'aimantation est strictement radiale en tout point desdites portions de couronne.

Conformément à l'invention lorsqu'aucun couple n'est transmis par le système d'entraînement 50, l'aimantation de chaque couronne est telle que les pôles de l'élément aimanté intérieur 56 sont en face de ceux de l'élément aimanté extérieur 52 et présentent une nature opposée en vis-à-vis, c'est-à-dire un pôle nord en regard d'un pôle sud (figure 5). Un tel accouplement magnétique est dit de type attractif.

La Demanderesse a découvert de manière tout à fait inattendue que le décalage axial d des plans médians P1 et P2 des deux couronnes 53, 54 qui encadrent axialement la troisième couronne 56 par rapport au plan médian P de ladite troisième couronne doit vérifier la relation suivante :

$$0,2 \leq 2d/|(R3 + R4) - (R1 + R2)| \leq 0,8$$

soit, en désignant par $R_M$ et $R_m$ les rayons moyens respectifs des deux éléments aimantés 52 et 56,

$$0,2 \leq d/|(R_M - R_m)| \leq 0,8$$

Cette relation définit un agencement particulier des trois couronnes des deux éléments aimantés 52 et 56 qui est valable quel que soit l'élément menant ou mené et quelle que soit la position radiale de l'un des éléments par rapport à l'autre (figures 3 et 4).

Lorsque la disposition des trois couronnes satisfait à l'exigence relationnelle exprimée ci-dessus le système d'entraînement par accouplement magnétique 50 selon l'invention présente de réels avantages par rapport à l'art antérieur.

Par contre, lorsque le rapport $d/|(R_M - R_m)|$ est inférieur à 0,2 ou supérieur à 0,8, les instabilités radiales et axiales redeviennent importantes dans le système d'entraînement.

Ainsi, lors du fonctionnement du compteur d'eau 1 auquel est appliqué le système d'entraînement 50, la turbine précédemment immobile est animée d'un mouvement de rotation autour de son axe et donc l'élément aimanté menant 52 s'écarte de la position qu'il occupait au repos pour adopter un mouvement de rotation.

En raison des forces magnétiques d'attraction qui s'exercent entre les couronnes 53, 54 de l'élément menant 52 et celle de l'élément mené 56 lorsque la turbine 20 est au repos, dès que l'élément menant 52 se met à tourner, les pôles de la couronne intérieure 56 tendent à suivre le mouvement des pôles des couronnes extérieures 53 et 54 et ainsi entraînent en rotation ladite couronne intérieure et donc l'arbre 40 relié au totalisateur.

Avantageusement, l'agencement particulier des trois couronnes permet de réduire considérablement les forces axiales et radiales exercées entre les deux éléments aimantés 52 et 56 et donc les guidages mécaniques qui portent lesdits éléments sont soumis à de faibles efforts qui n'engendrent que de faibles frottements. Par voie de conséquence, les performances du compteur d'eau sont améliorées et notamment sa sensibilité.

Préférentiellement, lorsque les rapports des dimensions de la couronne 56,

$$h_1/R_2 - R_1,$$

et des dimensions de chacune des couronnes 53, 54,

$$h_2/R_4 - R_3$$

sont compris entre les valeurs 1,5 et 0,66, le rapport

$$2d/|(R_3 + R_4) - (R_1 + R_2)|$$

est compris entre les valeurs 0,3 et 0,65.

Par exemple, lorsque $R_1 = 1,5$ mm, $R_2 = 3,75$ mm, $h_1 = 4$ mm, $R_3 = 6$ mm, $R_4 = 7,5$ mm, $h_2 = 3$ mm et $d = 2,7$ mm, le rapport

$$2d/|(R_3 + R_4) - (R_1 + R_2)|$$

est égal à 0,55.

Cette configuration préférentielle qui est celle représentée aux figures 2 à 4 apporte un avantage considérable, à savoir une plus grande compacité du système d'entraînement.

Si l'on réduit les dimensions des couronnes de manière à ce que chacune des dimensions suivantes $h_1$, $R_2-R_1$, $h_2$, $R_4-R_3$ soit inférieure à $(R_3-R_2)/4$, alors le rapport

$$2d/|(R_3 + R_4) - (R_1 + R_2)|$$

est compris entre 0,35 et 0,5 et l'on obtient un gain de compacité du système d'entraînement 50 supplémentaire par rapport au cas précédent. Par exemple, lorsque $R_1 = 1,5$ mm, $R_2 = 3,75$ mm, $h_1 = 1,5$ mm, $R_3 = 6$ mm, $R_4 = 7,5$ mm, $h_2 = 1,5$ mm et $d = 2$ mm, le rapport

$$2d/|(R_3 + R_4) - (R_1 + R_2)|$$

est égal à 0,41.

En outre, pour ces dispositions avantageuses, les performances du système d'entraînement 50 sont améliorées en termes de rapport poids des aimants/couple mécanique transmis, c'est-à-dire que pour une même masse d'aimants, le couple transmis est plus élevé, par rapport au système d'entraînement cité dans le brevet européen N°0034992.

Pour la configuration obtenue lorsque $d = 2,7$ mm, la figure 9 représente la force axiale s'exerçant sur la couronne de l'élément aimanté intérieur mené 56 en fonction du décalage axial de cet élément par rapport à la position du plan médian P.

Sur cette figure, on peut constater, d'une part, que l'effort axial exercé sur l'élément intérieur est nul sur un certain domaine autour de la position verticale centrée et, d'autre part, que la courbe représentative des variations de l'effort axial présente une tangente horizontale ce qui signifie que le système d'entraînement par accouplement magnétique 50 selon l'invention possède une raideur nulle pour cette configuration préférentielle. Il s'ensuit que les instabilités du système d'entraînement sont particulièrement réduites dans ce cas.

En outre, la Demanderesse a également pu constater que le système d'entraînement par accouplement magnétique 50 selon l'invention limite la transmission des vibrations entre élément menant et élément mené.

Un autre mode de réalisation de l'invention représenté à la figure 9 comprend un élément aimanté menant extérieur 62 formé de deux couronnes 63, 64 identiques de rayons minimal R3 et maximal R4 et un élément aimanté mené intérieur 66 formé d'une seule couronne de rayons minimal R1 et maximal R2, encadrée axialement par les deux autres couronnes.

Les deux couronnes 63, 64 d'aimantation de l'élément aimanté extérieur 66 sont reliées entre elles par une pièce 65 formant entretoise.

Cette pièce est une mince paroi cylindrique 65 en matériau magnétique et son aimantation est identique à celle de chaque couronne comme précédemment expliqué.

Cette caractéristique peut être très avantageuse du point de vue de la fabrication de l'élément aimanté 62.

Tel que représenté sur la figure 9, la paroi cylindrique 65 a un rayon maximal égal à R4 et un rayon minimal supérieur à R3.

Selon une variante non représentée, la paroi cylindrique 65 a un rayon maximal inférieur à R4 et un rayon minimal égal à R3.

Chaque couronne 63, 64, 66 possède dans un plan contenant l'axe de rotation une section droite rectangulaire.

Toutefois, selon encore une autre variante de l'invention, cette section est identique pour les deux couronnes 63, 64 de l'élément aimanté extérieur 62 mais n'est pas la même pour la couronne intérieure 66. En effet, la Demanderesse a pu constater qu'en ajoutant une paroi cylindrique 65 aimantée entre les couronnes 63, 64 de l'élément extérieur 62 et en augmentant la dimension axiale ou hauteur de chacune de ces couronnes par rapport à la couronne intérieure 66, le système d'entraînement 50 présente des effets techniques très intéressants en termes d'absence de création de force entre les deux parties de l'accouplement magnétique et donc de stabilité radiale et axiale. Cependant, ces effets techniques ne sont obtenus qu'à la condition que la dimension axiale ou hauteur de l'élément aimanté extérieur 62 soit supérieur à $2R_M + h_1$ où $R_M$ est le rayon moyen d'une couronne 63, 64. Les déplacements possibles de la partie intérieure 66 par rapport à la partie extérieure 62 sans création de forces d'interaction notables sont plus importants, mais l'encombrement axial de l'accouplement est plus élevé.

## Revendications

1. Système (50) d'entraînement en rotation autour d'un axe de deux organes mécaniques par accouplement magnétique, comportant un élément aimanté (52, 56, 62, 66) assujetti à chacun desdits organes mécaniques, les deux éléments aimantés (52, 56, 62, 66) étant concentriques, le premier desdits éléments aimantés possédant N pôles d'aimantation régulièrement disposés autour de l'axe de rotation suivant une couronne (56, 66) de rayons minimal $R_1$ et maximal $R_2$, N étant pair, le second élément aimanté (52, 62) possédant, d'une part, N pôles d'aimantation régulièrement disposés autour dudit axe de rotation suivant une couronne (53, 63) et, d'autre part, N pôles d'aimantation régulièrement disposés autour de l'axe de rotation suivant une couronne (54, 64) identique à l'autre couronne (53, 63) et de rayons minimal $R_3$ et maximal $R_4$, lesdites couronnes étant solidaires mécaniquement l'une de l'autre et ayant chacune un plan médian perpendiculaire à l'axe de rotation et décalé axialement d'une distance d par rapport au plan médian de la couronne du premier élément aimanté (56, 66) de manière à encadrer axialement cette dernière, caractérisé en ce que l'accouplement magnétique dudit système d'entraînement est de type attractif, l'aimantation de chaque élément aimanté ayant une direction contenue dans un plan perpendiculaire à l'axe de rotation, et le rapport

$$\frac{2d}{\left|(R_3 + R_4) - (R_1 + R_2)\right|}$$

étant compris entre 0,2 et 0,8.

2. Système d'entraînement par accouplement magnétique selon la revendication 1, caractérisé en ce que le rapport

$$\frac{2d}{\left|(R_3 + R_4) - (R_1 + R_2)\right|}$$

est préférentiellement compris entre 0,3 et 0,65 lorsque $h_1/R_2$-$R_1$ et $h_2/R_4$-$R_3$ sont compris entre 1,5 et 0,66, $h_1$ et $h_2$ étant les dimensions axiales ou hauteurs respectives de la couronne (56, 66) du premier élément aimanté et de chaque couronne (53, 63) et (54, 64) du second élément aimanté.

3. Système d'entraînement par accouplement magnétique selon les revendications 1 et 2, caractérisé en ce que le rapport

$$\frac{2d}{\left|(R_3 + R_4) - (R_1 + R_2)\right|}$$

est encore plus préférentiellement compris entre 0,35 et 0,5 lorsque chacune des dimensions $h_1$, $R_2$-$R_1$, $h_2$ et $R_4$-$R_3$ est sensiblement inférieure à

$$\left|R_3 - R_2\right|\big/4 \,.$$

**4.** Système d'entraînement par accouplement magnétique selon l'une des revendications 1 à 3, caractérisé en ce que les rayons R1 et R2 sont inférieurs au rayon minimal R3.

**5.** Système d'entraînement par accouplement magnétique selon l'une des revendications 1 à 3, caractérisé en ce que les rayons R1 et R2 sont supérieurs au rayon maximal R4.

**6.** Système d'entraînement par accouplement magnétique selon la revendication 1, caractérisé en ce que au moins un des éléments aimantés (52, 56, 62, 66) est aimanté de manière continue.

**7.** Système d'entraînement par accouplement magnétique selon la revendication 1, caractérisé en ce que au moins un des éléments aimantés (52, 56, 62, 66) est aimanté de manière discontinue et en ce que la (les) couronne(s) dudit élément aimanté est (sont) constituée(s) d'un nombre pair de portions de couronne aimantées.

**8.** Système d'entraînement par accouplement magnétique selon la revendication 7, caractérisé en ce que chaque portion de couronne aimantée a une direction d'aimantation uniforme et sensiblement radiale.

**9.** Système d'entraînement par accouplement magnétique selon la revendication 6 ou 7, caractérisé en ce que l'aimantation de chaque élément aimanté (52, 56, 62, 66) varie en fonction de la position angulaire et, pour une position angulaire donnée $\sigma$, l'orientation $\alpha_1$ de l'aimantation de l'élément aimanté de plus grand rayon maximal vérifie la relation $\alpha_1 = \frac{N}{2}\,\sigma + \sigma$, l'orientation $\alpha_2$ de l'aimantation de l'autre élément aimanté vérifiant la relation $\alpha_2 = -\frac{N}{2}\,\sigma + \sigma$.

**10.** Système d'entraînement par accouplement magnétique selon la revendication 6 ou 7, caractérisé en ce que l'aimantation de chaque élément aimanté (52, 56, 62, 66) a une direction sensiblement radiale.

**11.** Système d'entraînement par accouplement magnétique selon la revendication 1 ou 8, caractérisé en ce que le nombre de pôles N est de préférence égal à 4.

**12.** Système d'entraînement par accouplement magnétique selon la revendication 1, caractérisé en ce que le plan médian du premier élément aimanté (56, 66) est sensiblement confondu avec celui du second élément aimanté (52, 62).

**13.** Système d'entraînement par accouplement magnétique selon la revendication 1, caractérisé en ce que chaque couronne (53, 54, 56, 63, 64, 66) présente, dans un plan contenant l'axe de rotation, une section droite sensiblement carrée ou rectangulaire.

**14.** Système d'entraînement par accouplement magnétique selon l'une des revendications 1 à 13, caractérisé en ce qu'au moins une pièce (61, 65) formant entretoise est disposée entre les deux couronnes (53, 54, 63, 64) d'aimantation du second élément aimanté (52, 62).

**15.** Système d'entraînement par accouplement magnétique selon la revendication 14, caractérisé en ce que la pièce formant entretoise est une paroi cylindrique (61,65).

**16.** Système d'entraînement par accouplement magnétique selon la revendication 14 ou 15, caractérisé en ce que la pièce formant entretoise est en matériau magnétique.

**17.** Système d'entraînement par accouplement magnétique selon les revendications 14 à 16, caractérisé en ce que le matériau magnétique de la paroi cylindrique (65) possède la même aimantation que celle du second élément aimanté (62).

**18.** Système d'entraînement par accouplement magnétique selon les revendications 15 à 17, caractérisé en ce que la paroi cylindrique (65) a un rayon maximal inférieur à R4 et un rayon minimal égal à R3.

**19.** Système d'entraînement par accouplement magnétique selon les revendications 15 à 17, caractérisé en ce que la paroi cylindrique (65) a un rayon maximal égal à R4 et un rayon minimal supérieur à R3.

**20.** Système d'entraînement par accouplement magnétique selon la revendication 14 ou 15, caractérisé en ce que la pièce formant entretoise est en matériau amagnétique.

**21.** Système d'entraînement par accouplement magnétique selon les revendications 15 et 20, caractérisé en ce que la paroi cylindrique (61) a un rayon maximal égal à R4 et un rayon minimal égal à R3.

**22.** Compteur de fluide (1) comprenant une première chambre (10) et une seconde chambre (12) séparées par une paroi étanche (14), caractérisé en ce qu'il comprend un système d'entraînement par accouplement magnétique (50) selon l'une des revendications 1 à 21, ladite paroi étanche (14) formant un logement contenant l'un des éléments aimantés (52, 56, 62, 66), l'autre élément aimanté entourant ledit logement.

**23.** Compteur de fluide (1) selon la revendication 22, caractérisé en ce que chaque organe mécanique est un arbre, l'un (40) des arbres portant l'élément aimanté qui est contenu dans le logement est relié à un totalisateur, l'autre arbre (24) portant l'autre élément aimanté faisant partie d'une turbine axiale (20).

**Patentansprüche**

**1.** System (50) zum Drehantrieb von zwei mechanischen Organen um eine Achse durch magnetische Kopplung, das für jedes der mechanischen organe ein davon abhängiges Magnetelement (52, 56, 62, 66) aufweist, wobei die beiden Magnetelemente (52, 56, 62, 66) konzentrisch sind, wobei das erste der Magnetelemente N Magnetisierungspole aufweist, die in einem Kranz (56, 66) mit einem minimalen Radius $R_1$ und einem maximalen Radius $R_2$ regelmäßig um die Drehachse angeordnet sind, wobei N gerade ist, wobei das zweite Magnetelement (52, 62) einerseits N Magnetisierungspole, die in einem Kranz (53, 63) regelmäßig um die Drehachse angeordnet sind, sowie andererseits N Magnetisierungspole besitzt, die in einem mit dem anderen Kranz (53, 63) identischen Kranz (54, 64) mit einem minimalen Durchmesser $R_3$ und einem maximalen Durchmesser $R_4$ regelmäßig um die Drehachse angeordnet sind, wobei die Kränze mechanisch fest miteinander verbunden sind und jeweils eine zu der Drehachse senkrechte Mittelebene aufweisen, die axial um einen Abstand d bezüglich der Mittelebene des Kranzes des ersten Magnetelements (56, 66) derart versetzt ist, daß dieser axial umrahmt ist, dadurch gekennzeichnet, daß die magnetische Kopplung des Antriebssystem vom Anziehungstyp ist, wobei die Magnetisierung jedes Magnetelements eine Richtung aufweist, die in einer zu der Drehachse senkrechten Ebene liegt, und das Verhältnis $2d/|(R_3+R_4)-(R_1+R_2)|$ zwischen 0,2 und 0,8 liegt.

**2.** Antriebssystem durch magnetische Kopplung nach Anspruch 1, dadurch gekennzeichnet, daß das Verhältnis $2d/|(R_3+R_4)-(R_1+R_2)|$ bevorzugt zwischen 0,3 und 0,65 liegt, wenn $h_1/R_2-R_1$ und $h_2/R_4 -R_3$ zwischen 1,5 und 0,66 liegen, wobei $h_1$ und $h_2$ die axialen Abmessungen oder die Höhen des Kranzes (56, 66) des ersten Magnetelements bzw. jedes Kranzes (53, 63) und (56, 64) des zweiten Magnetelements sind.

**3.** Antriebssystem durch magnetische Kopplung nach den Ansprüchen 1 und 2, dadurch gekennzeichnet, daß das Verhältnis $2d/|(R_3+R_4)-(R_1+R_2)|$ noch bevorzugter zwischen 0,35 und 0,5 liegt, wenn jede der Abmessungen $h_1$, $R_2$-$R_1$, $h_2$ und $R_4$-$R_3$ im we-

sentlichen kleiner als $|R_3$-$R_2|/4$ ist.

**4.** Antriebssystem durch magnetische Kopplung nach einem der Ansprüche 1 bis 3, dadurch gekennzeichnet, daß die Radien $R_1$ und $R_2$ kleiner als der minimale Radius $R_3$ sind.

**5.** Antriebssystem durch magnetische Kopplung nach einem der Ansprüche 1 bis 3, dadurch gekennzeichnet, daß die Radien $R_1$ und $R_2$ größer als der maximale Radius $R_4$ sind.

**6.** Antriebssystem durch magnetische Kopplung nach Anspruch 1, dadurch gekennzeichnet, daß wenigstens eines der Magnetelemente (52, 56, 62, 66) kontinuierlich magnetisiert ist.

**7.** Antriebssystem durch magnetische Kopplung nach Anspruch 1, dadurch gekennzeichnet, daß wenigstens eines der Magnetelemente (52, 56, 62, 66) diskontinuierlich magnetisiert ist, und daß der Kranz (die Kränze) des Magnetelements aus einer geraden Anzahl von Magnetkranzabschnitten gebildet ist (sind).

**8.** Antriebssystem durch magnetische Kopplung nach Anspruch 7, dadurch gekennzeichnet, daß jeder Magnetkranzabschnitt eine gleichmäßige und im wesentlichen radiale Magnetisierungsrichtung aufweist.

**9.** Antriebssystem durch magnetische Kopplung nach Anspruch 6 oder 7, dadurch gekennzeichnet, daß die Magnetisierung jedes Magnetelements (52, 56, 62, 66) in Abhängigkeit von der Winkelposition variiert, und daß bei einer gegebenen Winkelposition $\sigma$ die Orientierung $\alpha_1$ der Magnetisierung des Magnetelements mit dem größeren maximalen Radius der Beziehung $\alpha_1 = (N/2) \sigma + \sigma$ genügt, wobei die orientierung $\alpha_2$ des anderen Magnetelements der Beziehung $\alpha_2 = - (N/2) \sigma + \sigma$ genügt.

**10.** Antriebssystem durch magnetische Kopplung nach Anspruch 6 oder 7, dadurch gekennzeichnet, daß die Magnetisierung jedes Magnetelements (52, 56, 62, 66) eine im wesentlichen radiale Richtung aufweist.

**11.** Antriebssystem durch magnetische Kopplung nach Anspruch 1 oder 8, dadurch gekennzeichnet, daß die Anzahl der Pole N bevorzugt gleich 4 ist.

**12.** Antriebssystem durch magnetische Kopplung nach Anspruch 1, dadurch gekennzeichnet, daß die Mittelebene des ersten Magnetelements (56, 66) im wesentlichen mit derjenigen des zweiten Magnetelements (52, 62) zusammenfällt.

13. Antriebssystem durch magnetische Kopplung nach Anspruch 1, dadurch gekennzeichnet, daß jeder Kranz (53, 54, 56, 63, 64, 66) in einer die Drehachse enthaltenden Ebene einen im wesentlichen quadratischen oder rechteckigen Querschnitt aufweist.

14. Antriebssystem durch magnetische Kopplung nach einem der Ansprüche 1 bis 13, dadurch gekennzeichnet, daß wenigstens ein ein Abstandsstück bildendes Teil (61, 65) zwischen den beiden Magnetisierungskränzen (53, 54, 63, 64) des zweiten Magnetelements (52, 62) angeordnet ist.

15. Antriebssystem durch magnetische Kopplung nach Anspruch 14, dadurch gekennzeichnet, daß das ein Abstandsstück bildende Teil eine zylindrische Wand (61, 65) ist.

16. Antriebssystem durch magnetische Kopplung nach Anspruch 14 oder 15, dadurch gekennzeichnet, daß das ein Abstandsstück bildende Teil aus einem Magnetmaterial besteht.

17. Antriebssystem durch magnetische Kopplung nach den Ansprüchen 14 bis 16, dadurch gekennzeichnet, daß das Magnetmaterial der zylindrischen Wand (65) die gleiche Magnetisierung wie das zweite Magnetelement (62) aufweist.

18. Antriebssystem durch magnetische Kopplung nach den Ansprüchen 15 bis 17, dadurch gekennzeichnet, daß die zylindrische Wand (65) einen maximalen Radius unter $R_4$ und einen minimalen Radius gleich $R_3$ aufweist.

19. Antriebssystem durch magnetische Kopplung nach den Ansprüchen 15 bis 17, dadurch gekennzeichnet, daß die zylindrische Wand (65) einen maximalen Radius gleich $R_4$ und einen minimalen Radius über $R_3$ aufweist.

20. Antriebssystem durch magnetische Kopplung nach Anspruch 14 oder 15, dadurch gekennzeichnet, daß das ein Abstandsstück bildende Teil aus unmagnetischem Material besteht.

21. Antriebssystem durch magnetische Kopplung nach den Ansprüchen 15 und 20, dadurch gekennzeichnet, daß die zylindrische Wand (61) einen maximalen Radius gleich $R_4$ und einen minimalen Radius gleich $R_3$ aufweist.

22. Flüssigkeitszähler (1) mit einer ersten Kammer (10) und einer zweiten Kammer (12), die durch eine dichte Wand (14) getrennt sind, dadurch gekennzeichnet, daß er ein Antriebssystem (50) durch magnetische Kopplung nach einem der Ansprüche 1 bis 21 aufweist, wobei die dichte Wand (14) eine Aufnahme bildet, die eines der Magnetelemente (52, 56, 62, 66) enthält, wobei das andere Magnetelement die Aufnahme umgibt.

23. Flüssigkeitszähler (1) nach Anspruch 22, dadurch gekennzeichnet, daß jedes mechanische Organ eine Welle ist, wobei eine Welle (40) ein Magnetelement trägt, das in der Aufnahme enthalten und mit einem Zählwerk verbunden ist, wobei die andere Welle (24) das andere Magnetelement trägt, das Teil einer Axialturbine (20) ist.

**Claims**

1. A drive system (50) for rotating two mechanical members about an axis by means of magnetic coupling, comprising a magnetic element (52, 56, 62, 66) secured to each of said mechanical members, the two magnetic elements (52, 56, 62, 66) being concentric, the first of said magnetic elements possessing N magnetic poles regularly distributed about the axis of rotation in a ring (56, 66) having a minimum radius $R_1$ and a maximum radius $R_2$, where N is even, the second magnetic element (52, 62) possessing, on the one hand, N magnetic poles regularly distributed about said axis of rotation in a ring (53, 63) and, on the other hand. N magnetic poles regularly distributed about the axis of rotation in a ring (54, 64) identical to the other ring (53, 63), where both rings have a minimum radius $R_3$ and a maximum radius $R_4$, said rings being mechanically secured to each other and each having a respective midplane perpendicular to the axis of rotation and that is axially offset by a distance d from the midplane of the ring of the first magnetic element (56, 66) in such a manner as to lie on opposite axial sides of said ring, characterized in that the magnetic coupling of said drive system is of the attractive type, the magnetization of each magnetic element having a direction that is contained in a plane perpendicular to the axis of rotation, and the ratio 2d/I $(R_3+R_4)-(R_1+R_2)$I lying in the range 0.2 to 0.8.

2. A drive system by means of magnetic coupling according to claim 1, characterized in that the ratio 2d/I$(R_3 + R_4)-(R1 + R2)$I preferably lies in the range 0.3 to 0.65 when $h_1/(R_2 - R_1)$ and $h_2/(R_4 - R_3)$ lie in the range 1.5 to 0.66, $h_1$ and $h_2$ being the axial or height dimensions respectively of the ring (56, 66) of the first magnetic element and of each of the rings (53. 63) and (54, 64) of the second magnetic element.

3. A drive system by means of magnetic coupling according to claims 1 and 2, characterized in that the ratio 2d/I$(R_3 - R_4) - (R1 - R2)$I lies even more preferably in the range 0.35 to 0.5, when each of the dimensions $h_1$, $(R_2 - R_1)$, $h_2$, and $(R_4 - R_3)$ is per-

ceptibly less than $R_3 - R_2$/4.

4. A drive system by means of magnetic coupling according to any one of claims 1 to 3, characterized in that the radii $R_1$ and $R_2$ are smaller than the minimum radius $R_3$.

5. A drive system by means of magnetic coupling according to any one of claims 1 to 3, characterized in that the radii $R_1$ and $R_2$ are greater than the maximum radius $R_4$.

6. A drive system by means of magnetic coupling according to claim 1, characterized in that at least one of the magnetic elements (52, 56,62, 66) is magnetized in continuous manner.

7. A drive system by means of magnetic coupling according to claim 1, characterized in that at least one of the magnetic elements (52, 56, 62, 66) is magnetized in discontinuous manner and wherein the ring(s) of said magnetic element is constituted by an even number of magnetic ring portions.

8. A drive system by means of magnetic coupling according to claim 7, characterized in that each magnetic ring portion has a direction of magnetization that is uniform and substantially radial.

9. A drive system by means of magnetic coupling according to claim 6 or 7, characterized in that the magnetization of each magnetic element (52, 56, 62, 66) varies as a function of angular position in such a manner that, for a given angular position σ, the direction $\alpha_1$ of the magnetization of the magnetic element having the larger maximum radius satisfies the relationship

$$\alpha_1 = 1/2N\sigma + \sigma$$

and the direction $\alpha_2$ of the magnetization of the other magnetic element satisfies the relationship

$$\alpha_2 = -1/2N\sigma + \sigma.$$

10. A drive system by means of magnetic coupling according to claim 6 or 7. characterized in that the magnetization of each magnetic element (52, 56, 62, 66) has a direction that is substantially radial.

11. A drive system by means of magnetic coupling according to claim 1 or 8, characterized in that the number N of poles is preferably equal to 4.

12. A drive system by means of magnetic coupling according to claim 1, characterized in that the midplane of the first magnetic element (56, 66) substantially coincides with that of the second magnetic element (52, 62).

13. A drive system by means of magnetic coupling according to claim 1, characterized in that. in a plane containing the axis of rotation, each ring (53, 54, 56, 63, 64, 66) has a right cross-section that is substantially square or rectangular in shape.

14. A drive system by means of magnetic coupling according to any one of claims 1 to 13, charactenzed in that at least one spacer-forming part (61, 65) is disposed between the two magnetic rings (53, 54, 63, 64) of the second magnetic element (52, 62).

15. A drive system by means of magnetic coupling according to claim 14, characterized in that the spacer-forming part is a cylindrical wall (61,65).

16. A drive system by means of magnetic coupling according to claim 14 or 15, characterized in that the spacer-forming part is made of magnetic material.

17. A drive system by means of magnetic coupling according to claims 14 to 16, characterized in that the magnetic material of the cylindrical wall (65) is magnetized in the same manner as the second magnetic element (62).

18. A drive system by means of magnetic coupling according to claims 15 to 17, characterized in that the cylindrical wall (65) has a maximum radius that is less than $R_4$ and a minimum radius that is equal to $R_3$.

19. A drive system by means of magnetic coupling according to claims 15 to 17, charactenzed in that the cylindrical wall has a maximum radius equal to $R_4$ and a minimum radius greater than $R_3$.

20. A drive system by means of magnetic coupling according to claim 14 or 15, characterized in that the spacer-forming part is made of non-magnetic material.

21. A drive system by means of magnetic coupling according to claims 15 and 20, characterized in that the cylindrical wall (61) has a maximum radius equal to $R_4$ and a minimum radius equal to $R_3$.

22. A fluid meter (1) comprising a first chamber (10) and a second chamber (12) that are separated by a fluid-tight wall (14), characterized in that it includes a drive system (50) by means of magnetic coupling according to any one of claims l to 21, said fluid-tight wall (14) fonning a housing containing one of the magnetic elements (52, 56, 62, 66) with the other magnetic element surrounding said housing.

**23.** A fluid meter (1) according to claim 22, wherein each of the mechanical members is a shaft, one (40) of the shafts carries the magnetic element that is contained in the housing and is connected to a totalizer, while the other shaft carries the other magnetic element and forms a portion of an axial turbine (20).

FIG.1

FIG.2

FIG.3

FIG.4

# FIG.5

FIG.6

FIG.7

FIG.9

FIG.8

EP 0 663 717 B1